# EUROPÄISCHE PATENTSCHRIFT

(11) **EP 3 422 901 B1**
(45) Veröffentlichungstag und Bekanntmachung des Hinweises auf die Patenterteilung: **09.09.2020**
(21) Anmeldenummer: 17708415.9
(22) Anmeldetag: 09.02.2017
(51) Int. Cl.: A47B 9/20, B29C 45/14, F16B 7/10

(54) **VERFAHREN ZUR HERSTELLUNG EINER GLEITFÜHRUNG**
METHOD FOR PRODUCING A SLIDING GUIDE
PROCÉDÉ DE FABRICATION D'UNE COULISSE

(30) Priorität: 29.02.2016 DE 102016103566
(43) Veröffentlichungstag der Anmeldung: 09.01.2019
(73) Patentinhaber: Oelschläger Metalltechnik GmbH, 27318 Hoya/Weser (DE)
(72) Erfinder: SPREEN, Andreas, 32351 Sternwede-Oppenwehe (DE)
(74) Vertreter: Manasse, Uwe
(86) Internationale Anmeldenummer: PCT/DE2017/100095
(87) Internationale Veröffentlichungsnummer: WO 2017/148467

(56) Entgegenhaltungen:
- EP-A1- 2 372 172
- WO-A1-2009/144593
- DE-B3-102013 009 193
- US-A- 3 989 281
- US-A- 5 243 874
- US-A1- 2008 178 779

## Beschreibung

Die vorliegende Erfindung betrifft ein Verfahren zur Herstellung einer Gleitführung zur Führung eines Innenrohres in einem relativ dazu beweglichen Außenrohr eines teleskopierbaren Tischgestellbauteils. Das Innen- und/oder das Außenrohr kann/können z. B. aus Stahl hergestellt sein.

Bei einem teleskopierbaren Tischgestellbauteil der eingangs genannten Art besteht die Gleitführung häufig aus einem oder mehreren Gleitelement(en), insbesondere aus einem gleitfähigen Kunststoff, das/die vorab hergestellt ist/sind und auf der Innenfläche des Außenrohres oder auf der Außenfläche des Innenrohres befestigt wird/werden, bevor ein Innenrohr in das Außenrohr geschoben oder aber das Außenrohr über ein Innenrohr geschoben wird.

US 3 989 281 A offenbart ein System zum Verbinden eines Aluminiurohrs, das als ein Gehäuse für ein mit Öl unter Druck umgebenes elektrisches Kabel ausgebildet ist. Die zu verbindenden Aluminiumrohrabschnitte sind fadengewickelt. Die Rohrabschnitte werden durch Schweißen oder Löten verbunden. Eine die verbundenen Rohre umgebende Hülse erstreckt sich zumindest über die blanken Aluminiumenden der verbundenen Rohrabschnitte. Ein Zwischen der Hülse und den verbundenen Rohrabschnitten gebildeter Hohlraum ist mit einer wärmehärtenden polymeren Verbindung gefüllt, die ausgehärtet ist. Die polymere Verbindung wird durch eine Öffnung in der Hülse eingebracht.

Der vorliegenden Erfindung liegt die Aufgabe zu Grunde, ein gleitfähiges Mittel in einen Raum zwischen zwei ineinandersteckenden Rohren einzubringen, ohne die Oberfläche des äußeren Rohres zu beeinträchtigen.

Erfindungsgemäß wird diese Aufgabe gelöst durch ein Verfahren zur Herstellung einer Gleitführung zur Führung eines Innenrohres in einem relativ dazu beweglichen Außenrohr eines teleskopierbaren Tischgestellbauteils nach Anspruch 1. Das Innenrohr und das Außenrohr können während des Spritzgießens z. B. dadurch zueinander in Position gehalten werden, dass das Innenrohr durch ein Spritzgießwerkzeug oder allgemein ein Werkzeug gehalten wird und/oder das Außenrohr in einer Vorrichtung außen positioniert wird. Damit der (eingespritzte) Kunststoff nur an einer der Flächen (Außenfläche des Innenrohres oder Innenfläche des Außenrohres) kleben bzw. haften bleibt, ist denkbar, dass das Innenrohr, wenn das Gleitelement auf der Innenfläche des Außenrohres angebracht werden soll, während des Spritzgiessens bewegt wird und, wenn das Gleitelement auf der Außenfläche des Innenrohres angebracht werden soll, das Außenrohr während des Spritzgiessens bewegt wird. Alternativ oder zusätzlich könnte auch die jeweilige Fläche (Außenfläche des Innenrohres bzw. Innenfläche des Außenrohres) speziell beschichtet sein, bzw. werden, um ein Anhaften des Kunststoffes zu verhindern.

Bei dem Verfahren kann vorgesehen sein, dass das Außenrohr und das Innenrohr vor dem Spritzgiessen in Ineinanderlage gebracht werden. Beispielsweise kann das Innenrohr in das Außenrohr geschoben werden. Es ist aber beispielsweise auch möglich, dass das Außenrohr über das Innenrohr geschoben wird. Wenn mehr als ein Gleitelement aufgebracht werden soll, so werden diese vorteilhafterweise simultan spritzgegossen. Vorteilhafterweise werden ein Spritzgiesswerkzeug und das Innenrohr relativ zueinander so bewegt, dass sich das Spritzgiesswerkzeug im Inneren des Innenrohres befindet. Beispielsweise kann das Spritzgiessw'erkzeug in das Innere des Innenrohres hineingeschoben werden oder aber das Innenrohr gemeinsam mit dem Außenrohr über das Spritzgiesswrerkzeug geschoben werden. Günstigerweise weist das Spritzgiesswerkzeug eine Einspritzlanze auf. Vorteilhafterweise wird der Kunststoff aktiv ausgehärtet. Beispielsweise kann dazu UV-Lichtverwendet werden.

Bei dem Verfahren kann vorgesehen sein, dass das Außenrohr und das Innenrohr Rundrohre sind.

Alternativ können das Außenrohr und das Innenrohr Mehreckrohre, insbesondere Rechteckrohre, sein.

Vorteilhafterweise ist das Gleitelement auf der Innenfläche des Außenrohres befestigt, insbesondere wobei das Außenrohr auf seiner Innenfläche Vertiefungen zur zumindest teilweisen Aufnahme des mindestens einen Gleitelements aufweist. Die Befestigung kann sich beispielsweise durch Aushärten des Kunststoffes auf der Innenfläche des Außenrohres ergeben.

Alternativ kann das Gleitelement auf der Außenfläche des Innenrohres befestigt sein, insbesondere wobei das Innenrohr auf seiner Außenfläche Vertiefungen zur zumindest teilweisen Aufnahme des mindestens einen Gleitelements aufweist.

Zweckmäßigerweise sind mehrere Gleitelemente in einer Radialebene, vorzugsweise äquidistant, umlaufend angeordnet. Beispielsweise können die Gleitelemente auch in mehreren Radialebenen in Gruppen angeordnet sein. Dabei kann zum Beispiel ein Winkelversatz zwischen in Axialrichtung aufeinanderfolgenden Gruppen von Gleitelementen bestehen.

Zweckmäßigerweise ist das mindestens eine Gleitelement plattenförmig gestaltet.

Vorteilhafterweise weist das Innenrohr mindestens eine Spritzgiesswerkzeugzugangsöffnung zum Spritzgiessen des Innengleitelements auf.

Schließlich kann vorgesehen sein, dass das Verteilrohr eine becherartige Mündung aufweist. Dies ist von Vorteil, um die Außenkontur des zu spritzgiessenden Gleitelements zu begrenzen bzw. zu bestimmen.

Der vorliegenden Erfindung liegt die überraschende Erkenntnis zu Grunde, dass durch eine Art "Gleitführungs-Direkteinspritzung" die Kosten für die Herstellung eines teleskopierbaren Tischgestellbauteils und insbesondere der Gleitführung desselben reduziert werden können. Im Stand der Technik müssen normalerweise Gleitelemente mit unterschiedlichen Stärken bereitgehalten (gelagert) und individuell verbaut werden. Mit dem Verfahren gemäß der vorliegenden Erfindung können Gleitelemente mit beliebiger Stärke und mit Toleranzausgleich leicht hergestellt werden.

Weitere Merkmale und Vorteile der Erfindung ergeben sich aus den beigefügten Ansprüchen und der nachfolgenden Beschreibung, in der anhand der schematischen Zeichnungen mehrere Ausführungsbeispiele der vorliegenden Erfindung beschrieben werden. Dabei zeigt/zeigen:
Figur 1 eine perspektivische Ansicht von einem Innenrohr und einem Außenrohr in einem Stadium eines Verfahrens zur Herstellung einer Gleitführung zur Führung des Innenrohres in dem relativ dazu beweglichen Außenrohr eines teleskopierbaren Tischgestellbauteils gemäß einer besonderen Ausführungsform der vorliegenden Erfindung;
Figur 2 das Innenrohr und das Außenrohr von Figur 1 in einem späteren Stadium des Verfahrens in perspektivischer Ansicht;
Figur 3 eine Schnittansicht entlang der Linie III-III vor einem Einspritzen bzw. Spritzgießen von gleitfähigem Kunststoff;
Figur 4 eine Ansicht wie Figur 3, aber nach einem Einspritzen von gleitfähigem Kunststoff;
Figur 5 eine Schnittansicht wie Figur 3 bzw. Figur 4, aber nach Fertigstellung einer Gleitführung;
Figur 6 eine Detailansicht von Figur 3; und
Figuren 7 bis 12 ähnliche Ansichten wie die Figuren 1 bis 6, aber mit anders gestalteten Innen/ und Außenrohren.

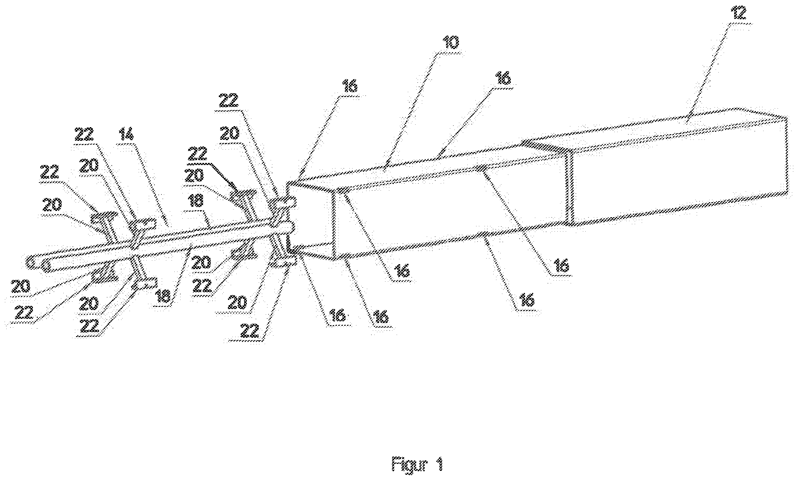

In der Figur 1 wird gerade ein Innenrohr 10, das als ein Rechteckrohr (Quadratrohr) ausgebildet ist, in ein Außenrohr 12, das ebenfalls als ein Rechteckrohr (Quadratrohr) ausgebildet ist, geschoben. Der Außendurchmesser des Innenrohres 10 ist kleiner als der Innendurchrnesser des Außenrohres 12. Zum Zuführen von gleitfähigem Kunststoff bzw. zum Zuführen eines Spritzgießwerkzeugs, das in diesem Beispiel eine Einspritzlanze 14 umfasst, weist das Innenrohr 10 mehrere Öffnungen auf. Im vorliegenden Beispiel handelt es sich um hier Spritzgießwerkzeugzugangsöffnungen 16 genannte Öffnungen in den vier Ecken der Rechteckrohre. In diesem Beispiel sind die Spritzgießwerkzeugzugangsöffnungen 16 in mehreren Gruppen, die in axialer Richtung beabstandet sind, angeordnet. Jede Gruppe besteht aus vier Spritzgießwerkzeugzugangsöffnungen 16, die in diesem Beispiel äquidistant über den Umfang umlaufend angeordnet sind. Jede der Spritzgießwerkzeugzugangsöffungen 16 weist in diesem Beispiel eine rechteckige Kontur auf. Sie könnten jedoch auch eine andere Kontur aufweisen.

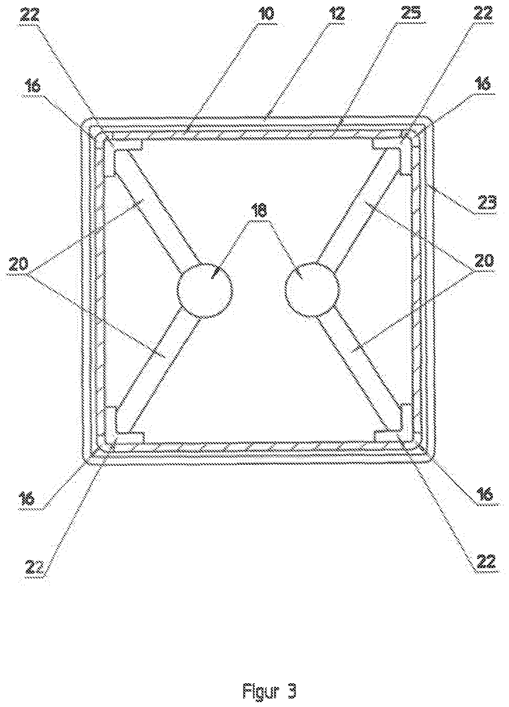

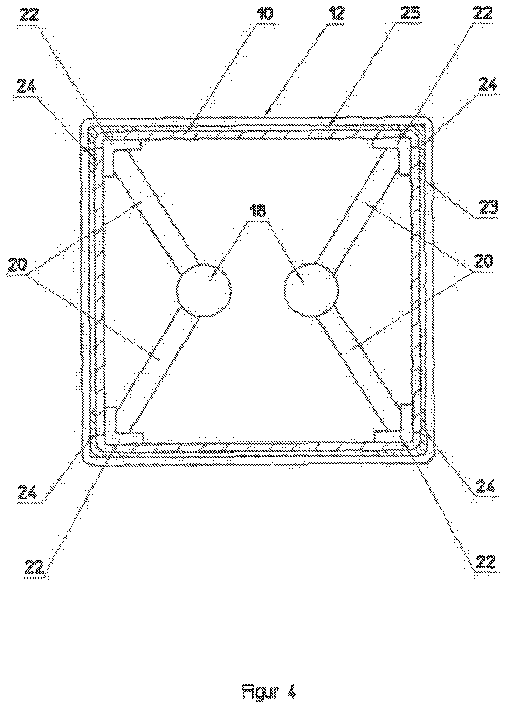

Die Einspritzlanze 14 umfasst zwei zueinander parallel verlaufende Zuführrohre 18, von denen in einer jeweiligen Radialebene jeweils zwei Verteilrohre 20 im rechten Winkel abgehen (s.a. Figuren 3 und 4). Jedes der Verteilrohre 20 weist eine becherartige Mündung 22 auf. Die Einspritzlanze 14 könnte aber auch nur ein Zuführrohr oder mehr als zwei. Zuführrohre aufweisen. Die Verteilrohre 20 und die Mündungen 22 sind so gestaltet und angeordnet, dass bei korrekter Anordnung der Einspritzlanze 14 in dem Innenrohr 10 die Mündungen 22 durch die Spritzgießwerkzeugzugangsöffnungen 16 nach außen vorragen und an der Innenfläche 23 des Außenrohres 12 anzulegen, um die Ausbreitung des Kunststoffes zu begrenzen und dadurch die Außenkontur eines resultierenden Gleitelements 24 (siehe Figuren 4 bis 6) festzulegen. Die Mündungen 22 können aber auch anders gestaltet sein. Beispielsweise können sie so gestaltet sein, dass der Kunststoff ungeführt durch die Spritzgießwerkzeugzugangsöffnung 16 tritt.

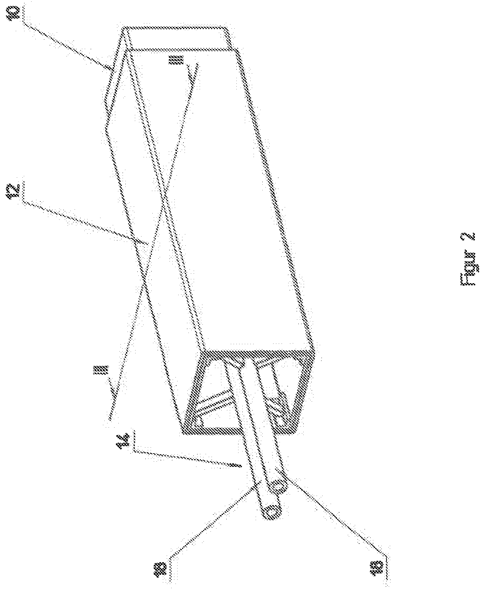

Figur 2 zeigt die Situation, in der sich das Innenrohr 10 und das Außenrohr 12 bereits in Ineinanderlage befinden und die Einspritzlanze 14 bereits in dem Innenrohr angeordnet ist. Es ist aber noch kein Kunststoff über die Einspritzlanze 14 eingespritzt worden (siehe Figur 3). Figur 4 zeigt nun die Situation nach dem Einspritzen von Kunststoff zur Herstellung der Gleitelemente 24 vor dem Entfernen der Einspritzlanze 14.

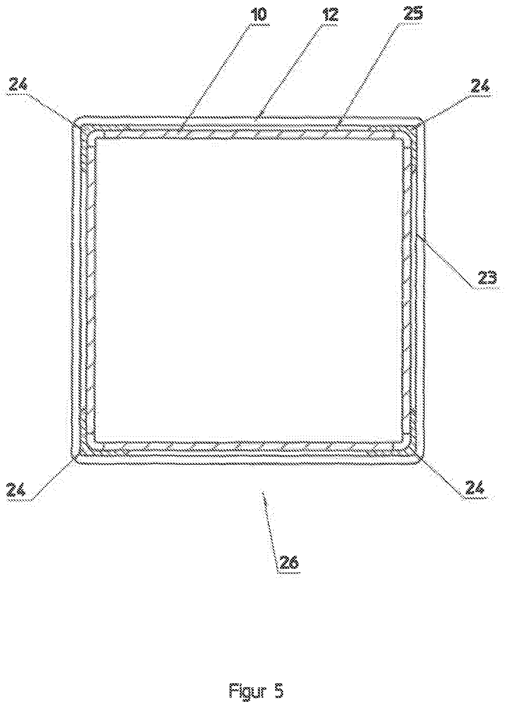

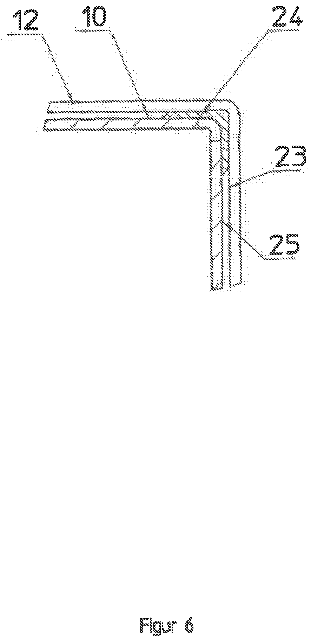

In den Figuren 5 und 6 ist im Prinzip ein fertiges teleskopierbares Tischgestellbauteil, in diesem Beispiel ein höhenverstellbares Tischbein 26 gezeigt, dass das Außenrohr 12 und das relativ dazu bewegliche und mittels einer Gleitführung geführte Innenrohr 10 umfasst. Die Gleitführung weist die spritzgegossenen Gleitelemente 24 aus gleitfähigem Kunststoff auf. Die Gleitelemente 24 sind als Winkel ausgebildet.

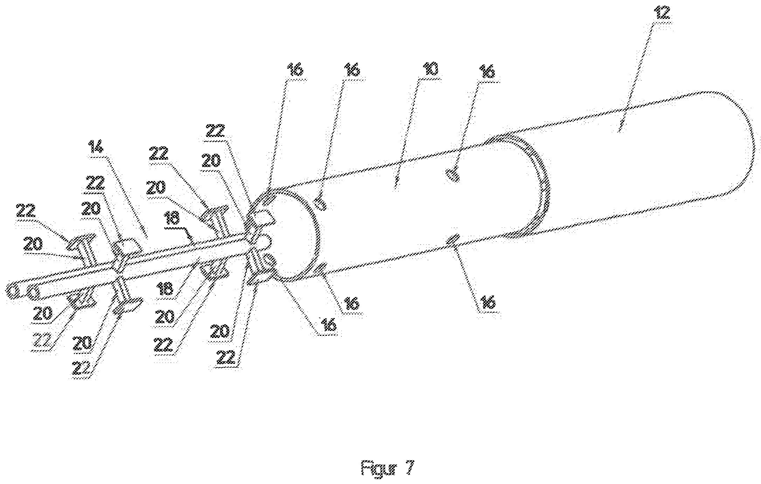

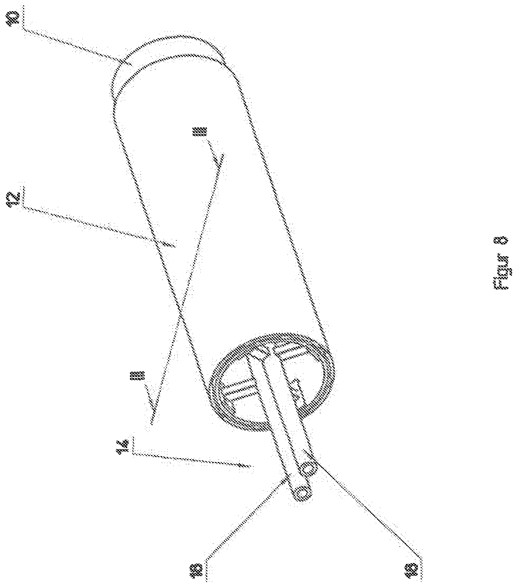

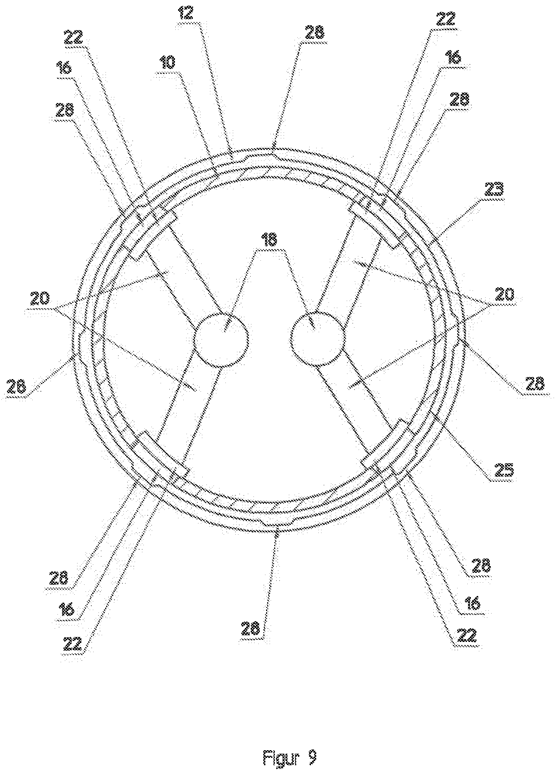

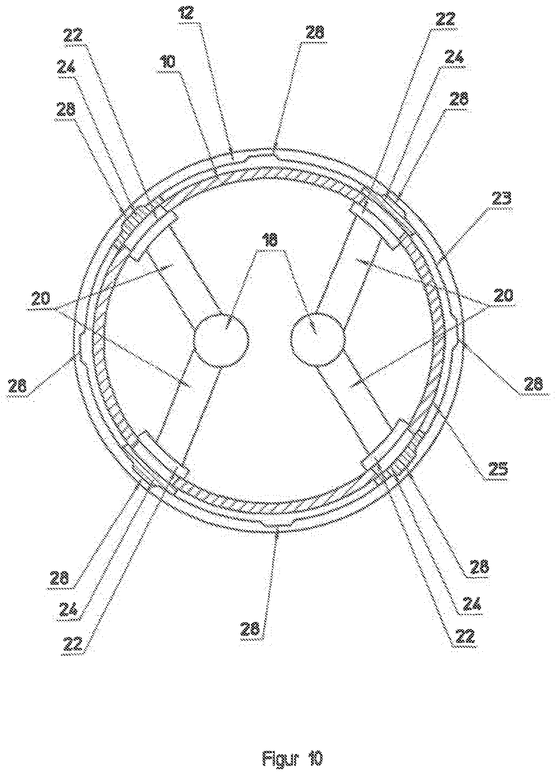

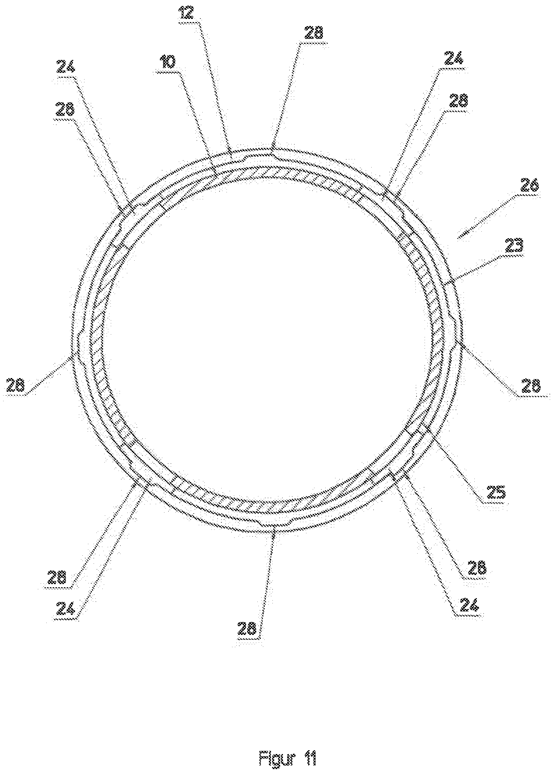

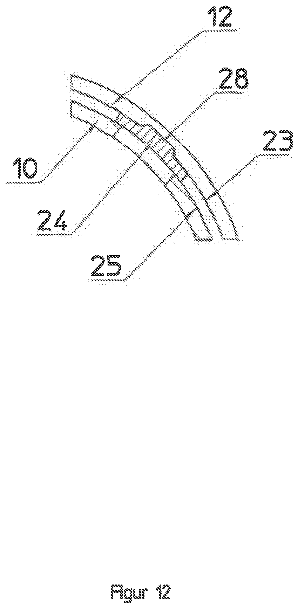

In den Figuren 7 bis 12 wird eine Variante gezeigt, bei der das Innenrohr 10 als ein Rundrohr und das Außenrohr 12 ebenfalls als ein Rundrohr ausgebildet ist. Auf der Innenfläche 23 des Außenrohres 12 sind Vertiefungen 28 zur Aufnahme zumindest eines Teils des eingespritzten Kunststoffes ausgebildet. Dies kann für eine besonders sichere Verbindung des Kunststoffes mit dem Außenrohr 12 von Vorteil sein. Die Vertiefungen 28 können sich in Längsrichtung durchgehend erstrecken.

Die in der vorstehenden Beschreibung, in den Zeichnungen sowie in den Ansprüchen offenbarten Merkmale der Erfindung können sowohl einzeln als auch in den beliebigen Kombinationen für die Verwirklichung der Erfindung in ihren verschiedenen Ausführungsformen wesentlich sein.

### Bezugszeichenliste

- 10: Innenrohr
- 12: Außenrohr
- 14: Einspritzlanze
- 16: Spritzgießwerkzeugzugangsöffnungen
- 18: Zuführrohre
- 20: Verteilrohre
- 22: Mündungen
- 23: Innenfläche
- 24: Gleitelemente
- 25: Außenfläche
- 26: Tischbein
- 28: Vertiefungen

## Patentansprüche

1. Verfahren zur Herstellung einer Gleitführung zur Führung eines Innenrohres (10) in einem relativ dazu beweglichen Außenrohr (12) eines teleskopierbaren Tischgestellbauteils, umfassend
Aufbringen von mindestens einem Gleitelement (24) aus einem gleitfähigen Kunststoff auf der Innenfläche (23) des Außenrohres (12) oder auf der Außenfläche (25) des Innenrohres (10) durch Spritzgießen mittels eines Spritzgießwerkzeugs, das eine Einspritzlanze (14) mit mindestens einem, vorzugsweise geraden, Zuführrohr (18), von dem seitlich, vorzugsweise im rechten Winkel, mindestens ein Verteilrohr (20) abgeht, aufweist, wobei besagter Kunststoff im Inneren des Innenrohres (10) über das Verteilrohr (20) durch eine Spritzgießwerkzeugzugangsöffnung (16) in demselben zugeführt wird.

2. Verfahren nach Anspruch 1, wobei das Außenrohr (12) und das Innenrohr (10) vor dem Spritzgießen in Ineinanderlage gebracht werden.

3. Verfahren nach einem der Ansprüche 1 oder 2, wobei ein Spritzgießwerkzeug und das Innenrohr (10) relativ zueinander so bewegt werden, dass sich das Spritzgießwerkzeug im Inneren des Innenrohres (10) befindet.

4. Verfahren nach einem der Ansprüche 1 bis 3, wobei der Kunststoff aktiv ausgehärtet wird.

5. Verfahren nach einem der vorangehenden Ansprüche, wobei das Außenrohr (12) und das Innenrohr (10) Rundrohre sind.

6. Verfahren nach einem der vorangehenden Ansprüche, wobei das Außenrohr (12) und das Innenrohr (10) Mehreckrohre, insbesondere Rechteckrohre, sind.

7. Verfahren nach einem der vorangehenden Ansprüche, wobei das Gleitelement (24) auf der Innenfläche (23) des Außenrohres (12) befestigt ist, insbesondere wobei das Außenrohr (12) auf seiner Innenfläche (23) Vertiefungen (28) zur zumindest teilweisen Aufnahme des mindestens einen Gleitelements (24) aufweist.

8. Verfahren nach einem der Ansprüche 1 bis 6, wobei das Gleitelement (24) auf der Außenfläche (25) des Innenrohres (10) befestigt ist, insbesondere wobei das Innenrohr (10) auf seiner Außenfläche (25) Vertiefungen zur zumindest teilweisen Aufnahme des mindestens einen Gleitelements (24) aufweist.

9. Verfahren nach einem der vorangehenden Ansprüche, wobei mehrere Gleitelemente (24) in einer Radialebene, vorzugsweise äquidistant, umlaufend angeordnet sind.

10. Verfahren nach einem der vorangehenden Ansprüche, wobei das mindestens eine Gleitelement (24) plattenförmig gestaltet ist.

## Claims

1. Method for producing a sliding guide for guiding an inner tube (10) in an outer tube (12) that is movable in relation thereto of a telescopic table frame part, comprising
attaching at least one sliding element (24) of a slidable plastic on the inner surface (23) of the outer tube (12) or on the outer surface (25) of the inner tube (10) by injection moulding by means of an injection moulding tool, which has an injection lance (14) with at least one, preferably straight, feed tube (18), from which at least one distribution pipe (20) extends laterally, preferably at right angles, wherein said plastic is fed inside the inner tube (10) via the distribution pipe (20) through an injection-moulding tool access opening (16) in the same.

2. Method according to Claim 1, wherein the outer tube (12) and the inner tube (10) are brought into position one inside the other before the injection moulding.

3. Method according to either of Claims 1 and 2, wherein an injection moulding tool and the inner tube (10) are moved in relation to one another in such a way that the injection moulding tool is inside the inner tube (10).

4. Method according to one of Claims 1 to 3, wherein the plastic is actively cured.

5. Method according to one of the preceding claims, wherein the outer tube (12) and the inner tube (10) are round tubes.

6. Method according to one of the preceding claims, wherein the outer tube (12) and the inner tube (10) are polygonal tubes, in particular rectangular tubes.

7. Method according to one of the preceding claims, wherein the sliding element (24) is fastened on the inner surface (23) of the outer tube (12), in particular wherein the outer tube (12) has on its inner surface (23) depressions (28) for at least partially receiving the at least one sliding element (24).

8. Method according to one of Claims 1 to 6, wherein the sliding element (24) is fastened on the outer surface (25) of the inner tube (10), in particular wherein the inner tube (10) has on its outer surface (25) depressions for at least partially receiving the at least one sliding element (24).

9. Method according to one of the preceding claims, wherein a number of sliding elements (24) are arranged running around in a radial plane, preferably equidistantly.

10. Method according to one of the preceding claims, wherein the at least one sliding element (24) is designed in the form of a plate.

## Revendications

1. Procédé de fabrication d'une coulisse destinée au guidage d'un tube interne (10) dans un tube externe (12) mobile par rapport à celui-ci d'un élément structural de bâti de table, comprenant
application d'au moins un élément de glissement (24) en une matière plastique glissante sur la surface intérieure (23) du tube externe (12) ou sur la surface extérieure (25) du tube interne (10) par moulage par injection au moyen d'un outil de moulage par injection, lequel possède une lance d'injection (14) pourvue d'au moins un tube d'amenée (18) de préférence droit duquel s'écarte latéralement, de préférence selon un angle droit, un tube de distribution (20), ladite matière plastique étant acheminée à l'intérieur du tube interne (10) par le biais du tube de distribution (20) à travers une ouverture d'accès d'outil de moulage par injection (16) dans celui-ci.

2. Procédé selon la revendication 1, le tube externe (12) et le tube interne (10) étant amenés en position emmanchés l'un dans l'autre avant le moulage par injection.

3. Procédé selon la revendication 1 ou 2, un outil de moulage par injection et le tube interne (10) étant déplacés l'un par rapport à l'autre de telle sorte que l'outil de moulage par injection se trouve à l'intérieur du tube interne (10).

4. Procédé selon l'une des revendications 1 à 3, la matière plastique étant durcie activement.

5. Procédé selon l'une des revendications précédentes, le tube externe (12) et le tube interne (10) étant des tubes ronds.

6. Procédé selon l'une des revendications précédentes, le tube externe (12) et le tube interne (10) étant des tubes polygonaux, notamment des tubes rectangulaires.

7. Procédé selon l'une des revendications précédentes, l'élément de glissement (24) étant fixé sur la surface intérieure (23) du tube externe (12), le tube externe (12) possédant notamment, sur sa surface intérieure (23), des empreintes (28) destinées à accueillir au moins partiellement l'au moins un élément de glissement (24) .

8. Procédé selon l'une des revendications 1 à 6, l'élément de glissement (24) étant fixé sur la surface extérieure (25) du tube interne (10), le tube interne (10) possédant notamment, sur sa surface extérieure (25), des empreintes destinées à accueillir au moins partiellement l'au moins un élément de glissement (24).

9. Procédé selon l'une des revendications précédentes, plusieurs éléments de glissement (24) étant disposés circonférentiellement, de préférence de manière équidistante, dans un plan radial.

10. Procédé selon l'une des revendications précédentes, l'au moins un élément de glissement (24) étant réalisé en forme de plaque.
